# EUROPEAN PATENT APPLICATION

(11) **EP 3 483 559 A1**
(43) Date of publication of application: **15.05.2019**
(21) Application number: 18205854.5
(22) Date of filing: 13.11.2018
(51) Int. Cl.: G01C 21/36, G01C 21/34

(54) **IN-VEHICLE DEVICE, CLASSIFICATION METHOD**

(30) Priority: 14.11.2017 JP 2017219445
(71) Applicant: Clarion Co., Ltd., Saitama-shi, Saitama 330-0081 (JP)
(72) Inventor: YAMAGUCHI, Takashi, Saitama, 330-0081 (JP); KONDO, Akihiro, Tokyo, 100-8280 (JP); MATSUMOTO, Takashi, Tokyo, 100-8280 (JP)
(74) Representative: Hoefer & Partner Patentanwälte mbB

(57) **Abstract**

An in-vehicle device which can be installed in a vehicle and comprises a storage unit which stores a scheduled route to be traveled on by the vehicle, a position acquisition unit which acquires an own vehicle position as a position of the vehicle, and a classification unit which determines a classification of a turn error as an error related to a path of the vehicle from a relation of the own vehicle position, which deviated from the scheduled route, and the scheduled route, and which associates the determined classification of the turn error and an intersection through which the vehicle traveled on the scheduled route.

## Description

### TECHNICAL FIELD

The present invention relates to an in-vehicle device, a server, a classification method, and a route guiding system.

### BACKGROUND ART

A navigation device which guides a driver driving a vehicle to the intended destination is being broadly used. PTL 1 discloses a navigation device comprising deviation point information acquisition means which acquires deviation point information relating to a deviation point where a vehicle traveling on a set route deviates from the set route, post-deviation travel history information acquisition means which acquires post-deviation travel history information relating to a travel history after a deviated vehicle, which is a vehicle running on the set route that deviated from the set route at the deviation point, deviated from the deviation point, travel determination means which determines, for each of the deviated vehicles, whether the deviated vehicle is traveling along a rerouted route that was set after the deviated vehicle deviated from the set route at the deviation point based on the post-deviation travel history information, rerouting travel ratio determination means which determines whether a ratio of the deviated vehicles determined to be traveling along the rerouted route, among the deviated vehicles, is equal to or greater than a first predetermined value, and guide determination means which determines that guiding of the route is inappropriate when the ratio of the deviated vehicles determined to be traveling along the rerouted route is determined to equal to or greater than the first predetermined value by the rerouting travel ratio determination means.

### CITATION LIST

### PATENT LITERATURE

[PTL 1] Japanese Patent No. 5584107

### SUMMARY OF INVENTION

### TECHNICAL PROBLEM

The invention described in PTL 1 is unable to prevent turn errors.

### SOLUTION TO PROBLEM

The in-vehicle device according to the first mode of the present invention is an in-vehicle device which can be installed in a vehicle, comprising a storage unit which stores a scheduled route to be traveled on by the vehicle, a position acquisition unit which acquires an own vehicle position as a position of the vehicle, and a classification unit which determines a classification of a turn error as an error related to a path of the vehicle from a relation of the own vehicle position, which deviated from the scheduled route, and the scheduled route, and which associates the determined classification of the turn error and an intersection through which the vehicle traveled on the scheduled route.
The classification method according to the third mode of the present invention is a classification method to be executed by a computer installed in a vehicle and comprising a storage unit which stores a scheduled route to be traveled by the vehicle, comprising the steps of acquiring an own vehicle position as a position of the vehicle, and determining a classification of a turn error as an error related to a path of the vehicle from a relation of the own vehicle position, which deviated from the scheduled route, and the scheduled route, and associating the determined classification of the turn error and an intersection through which the vehicle traveled on the scheduled route.

### ADVANTAGEOUS EFFECTS OF INVENTION

According to the present invention, it is possible to acquire information for preventing a turn error for each intersection.

### BRIEF DESCRIPTION OF DRAWINGS

[Fig. 1]

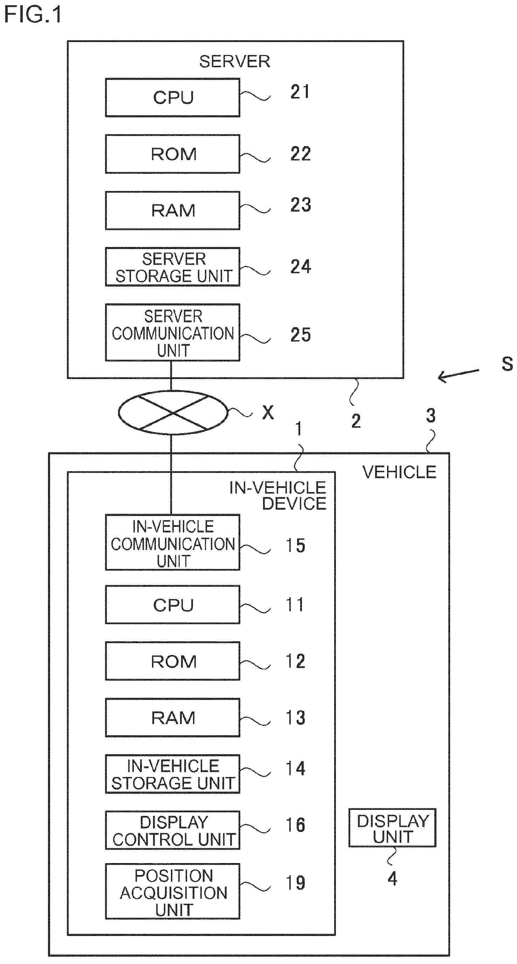

   Fig. 1 is a diagram showing the hardware configuration of the route guiding system S.
[Fig. 2]

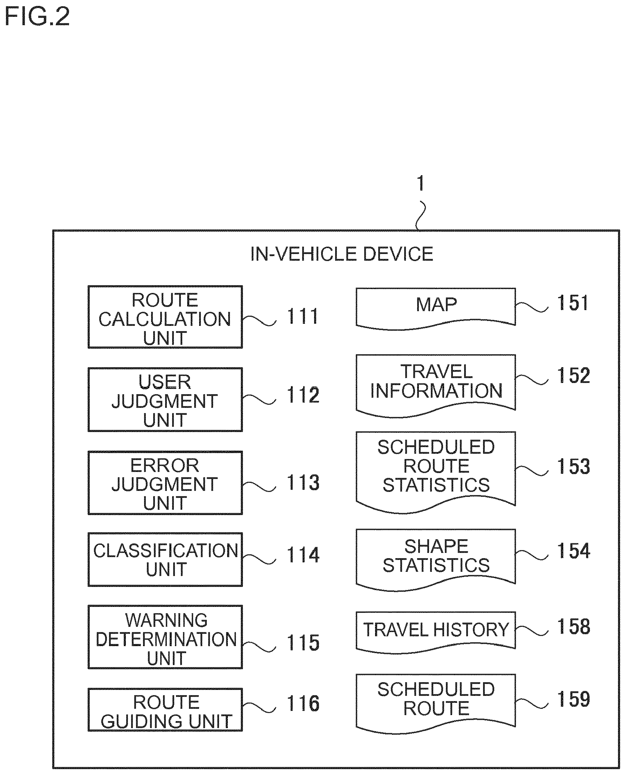

   Fig. 2 is a functional block diagram of the in-vehicle device 1 in the first embodiment.
[Fig. 3A]

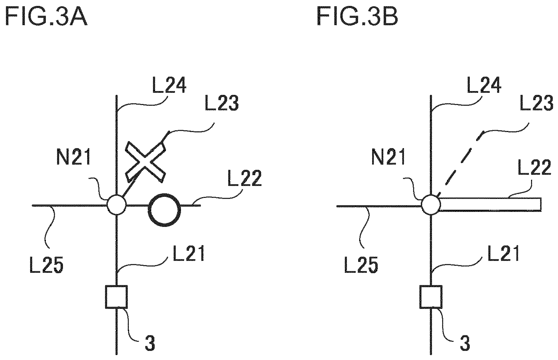

   Fig. 3A is an example of adding a marker of the schematic diagram of the screen displayed on the display unit 4.
[Fig. 3B]
   Fig. 3B is an example of changing the representation of the node of the schematic diagram of the screen displayed on the display unit 4.
[Fig. 4]

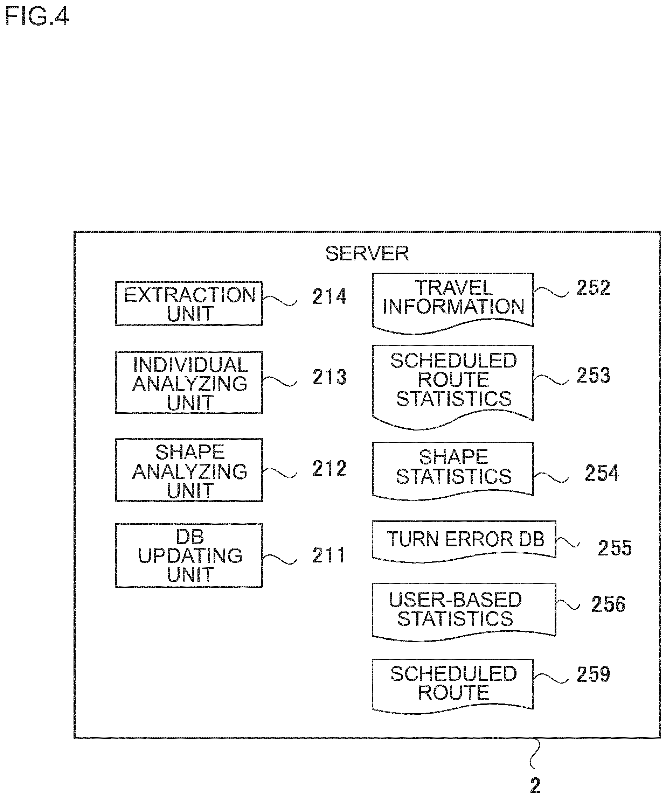

   Fig. 4 is a functional block diagram of the server 2.
[Fig. 5A]

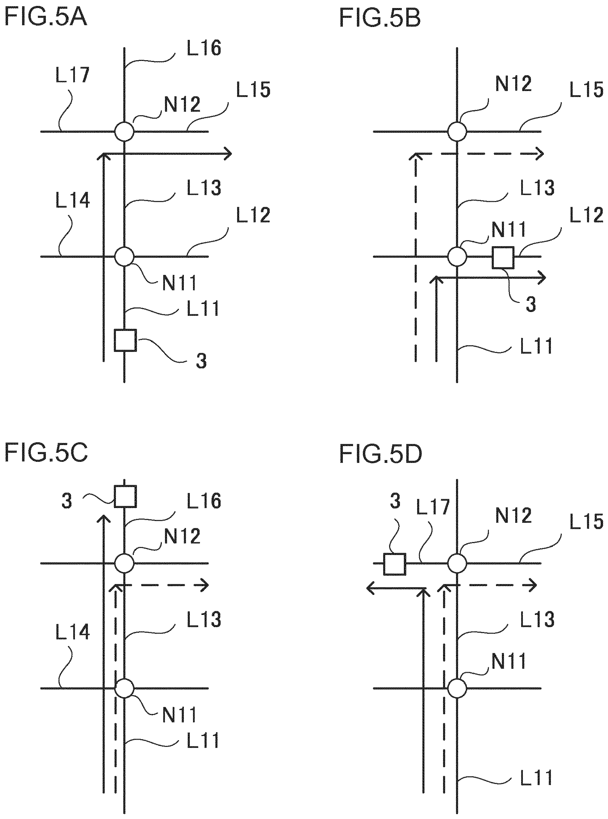

   Fig. 5A is a diagram showing the scheduled route.
[Fig. 5B]
   Fig. 5B is a diagram showing an undershoot error.
[Fig. 5C]
   Fig. 5c is a diagram showing an overshoot error.
[Fig. 5D]
   Fig. 5D is a diagram showing a direction error.
[Fig. 6]

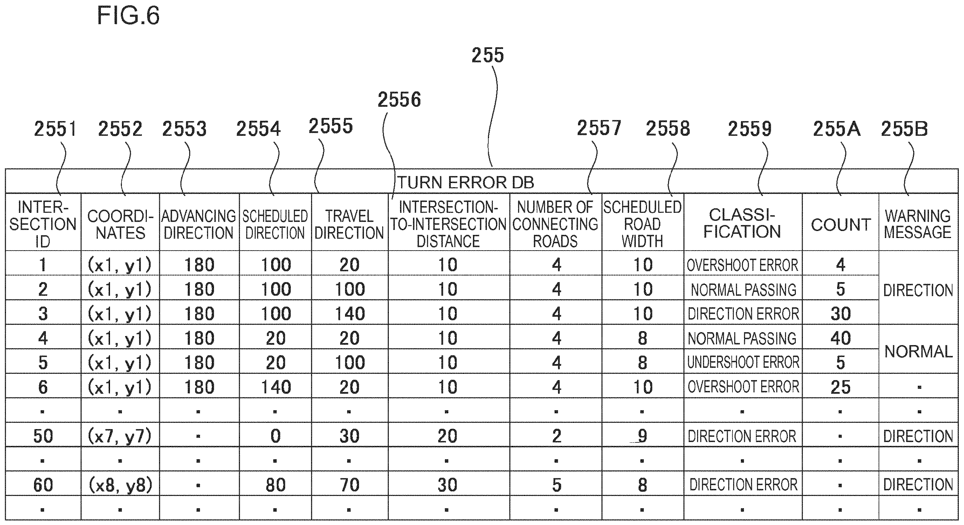

   Fig. 6 is a diagram showing an example of the turn error DB 255.
[Fig. 7]

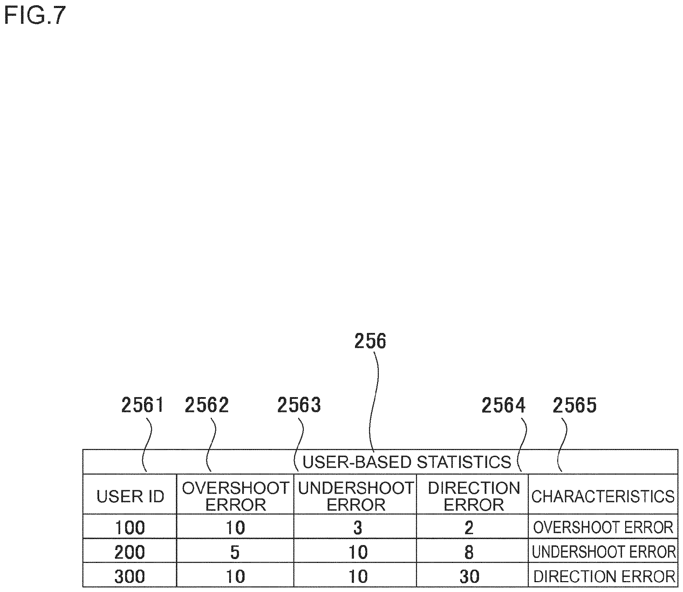

   Fig. 7 is a diagram showing an example of the user-based statistics 256.
[Fig. 8]

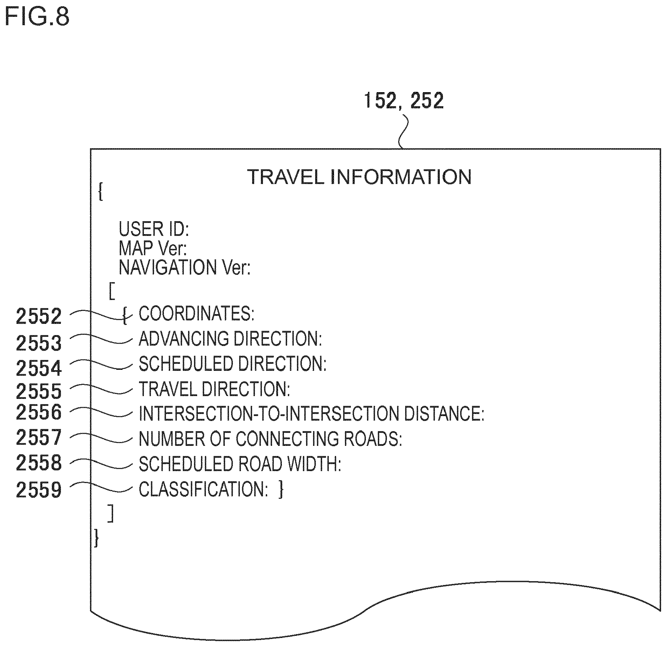

   Fig. 8 is a diagram showing an example of the travel information 152, 162.
[Fig. 9]

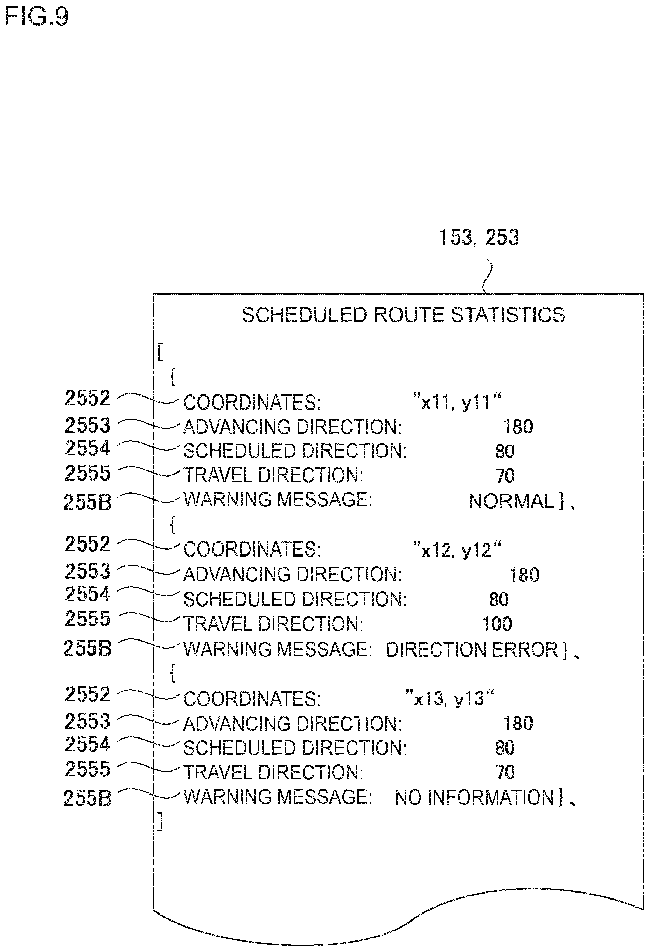

   Fig. 9 is a diagram showing an example of the scheduled route statistics 153, 253.
[Fig. 10]

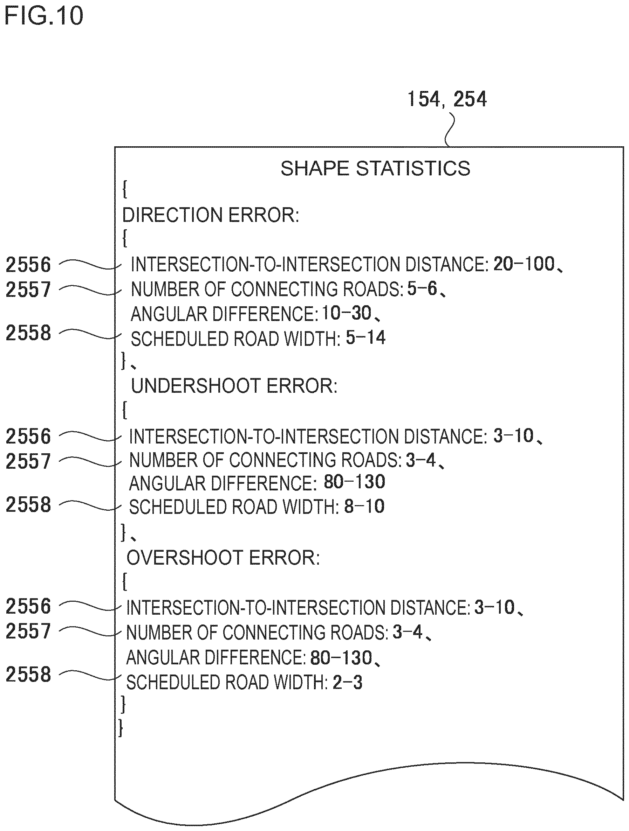

   Fig. 10 is a diagram showing an example of the shape statistics 154, 254.
[Fig. 11]

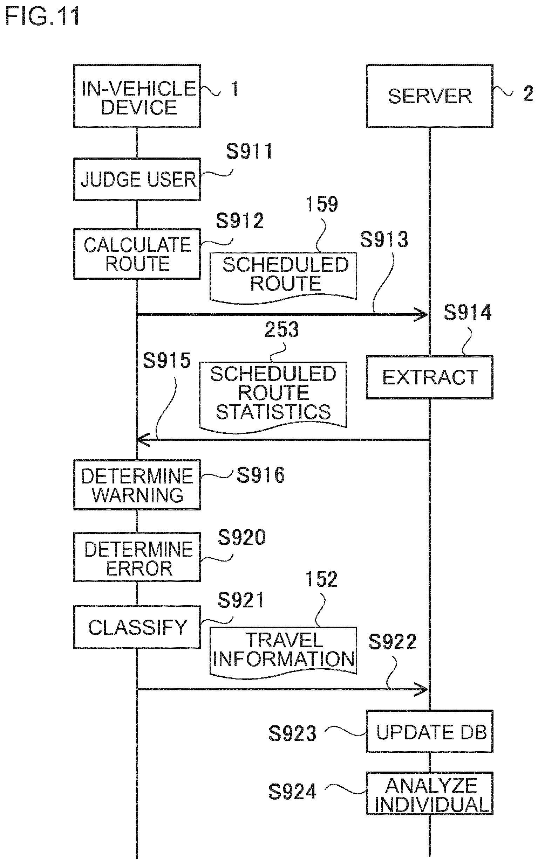

   Fig. 11 is a timing chart showing the operational overview of the route guiding system S.
[Fig. 12]

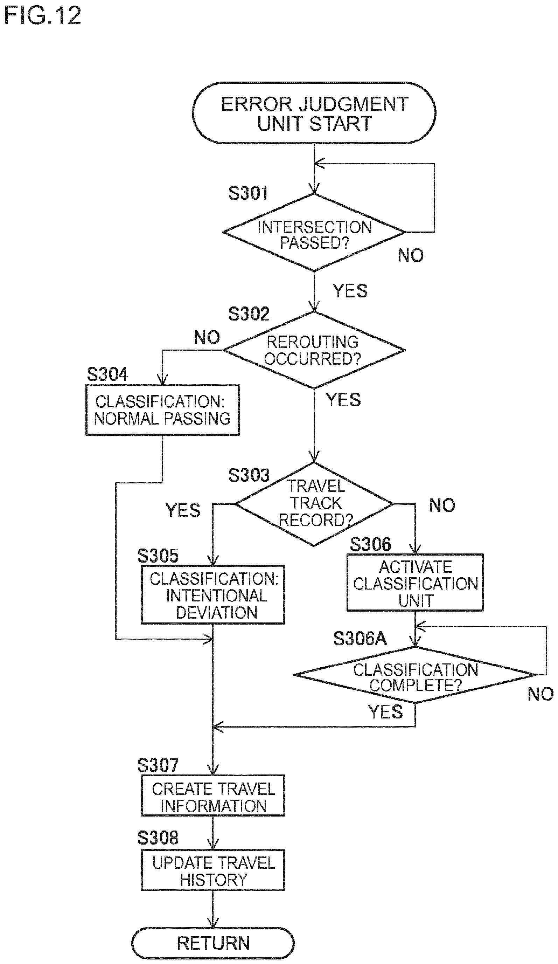

   Fig. 12 is a flowchart showing the operation of the error judgment unit 113.
[Fig. 13]

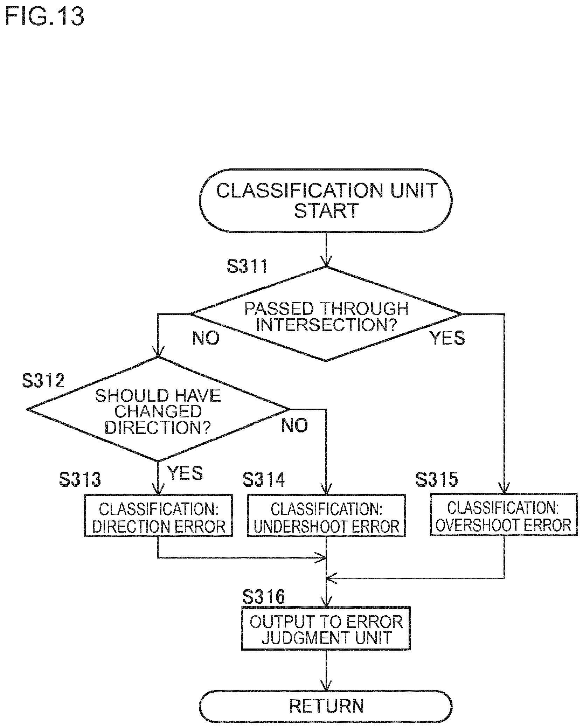

   Fig. 13 is a flowchart showing the operation of the classification unit 114.
[Fig. 14]

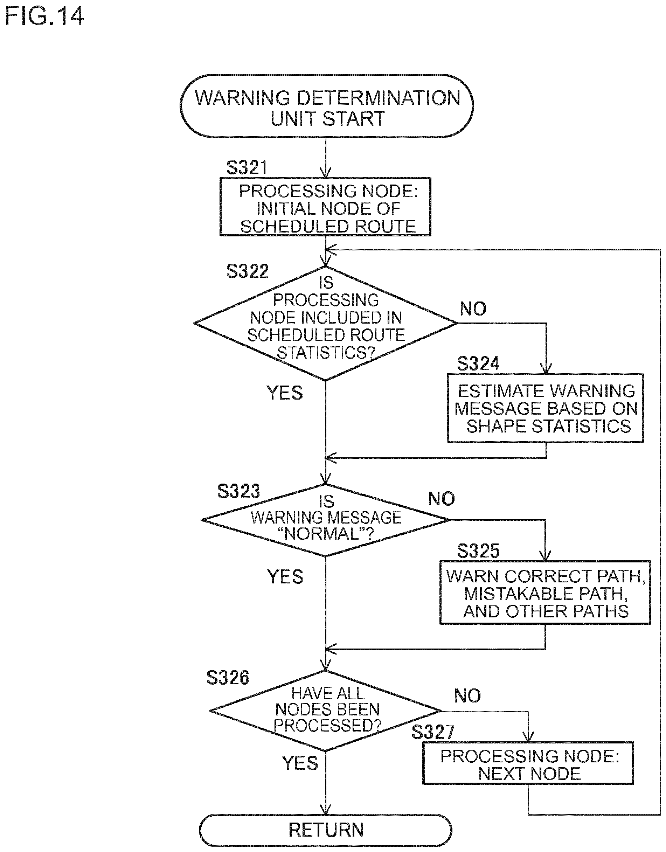

   Fig. 14 is a flowchart showing the operation of the warning determination unit 115.
[Fig. 15]

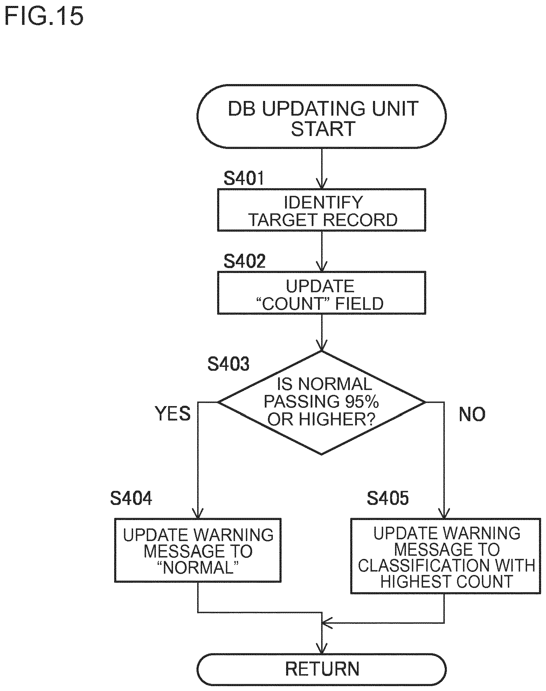

   Fig. 15 is a flowchart showing the operation of the DB updating unit 211.
[Fig. 16]

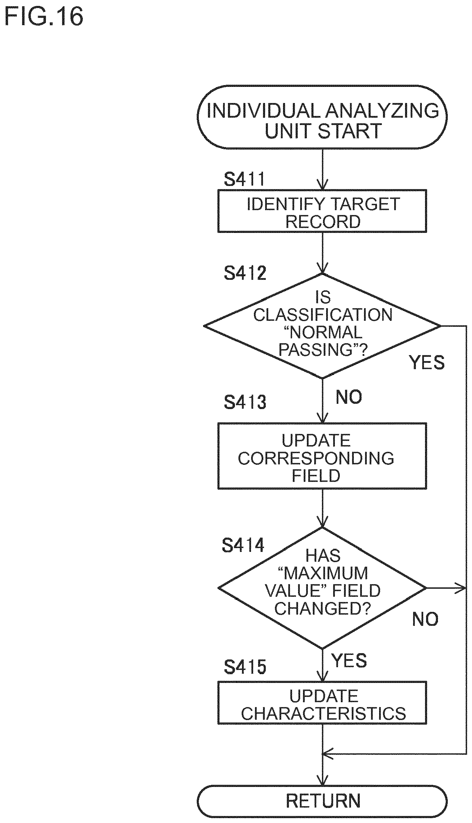

   Fig. 16 is a flowchart showing the operation of the individual analyzing unit 213.
[Fig. 17]

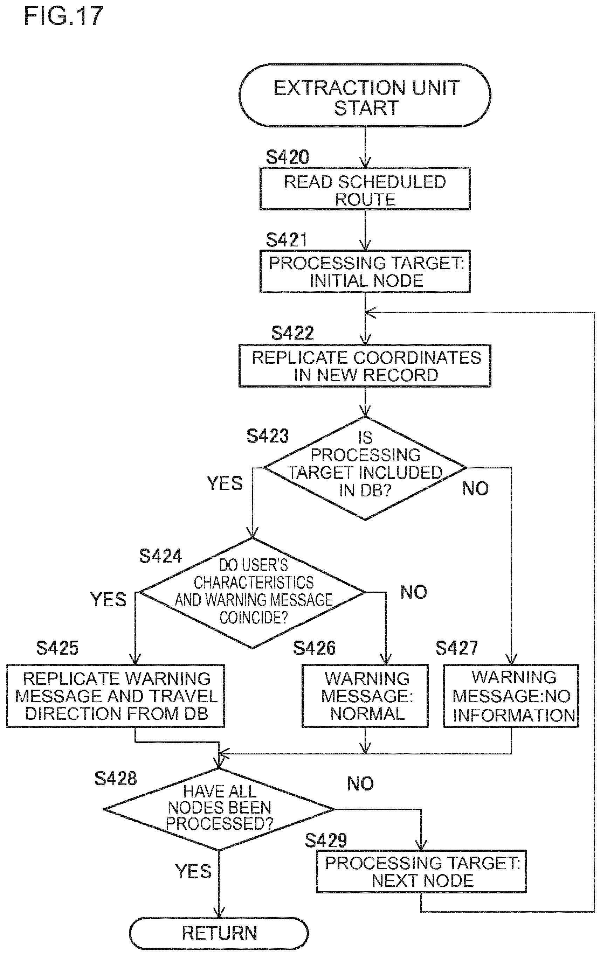

   Fig. 17 is a flowchart showing the operation of the extraction unit 214.
[Fig. 18]

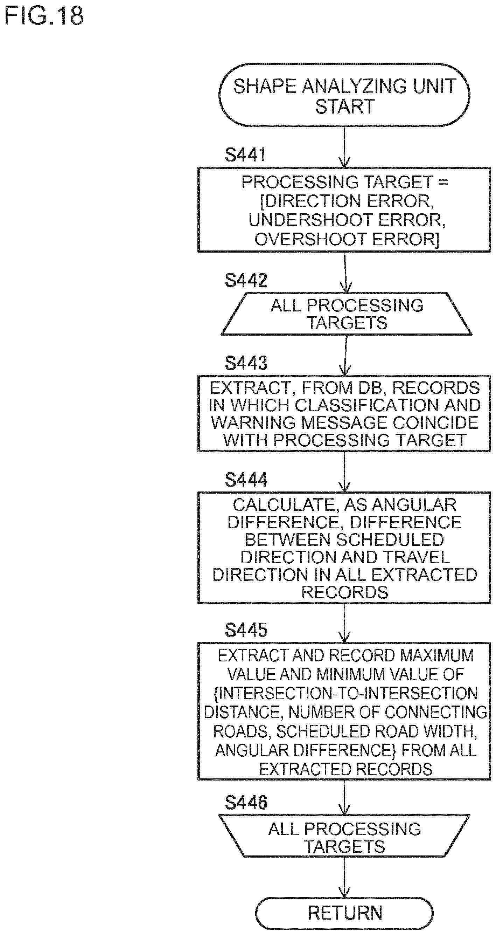

   Fig. 18 is a flowchart showing the operation of the shape analyzing unit 212.
[Fig. 19]

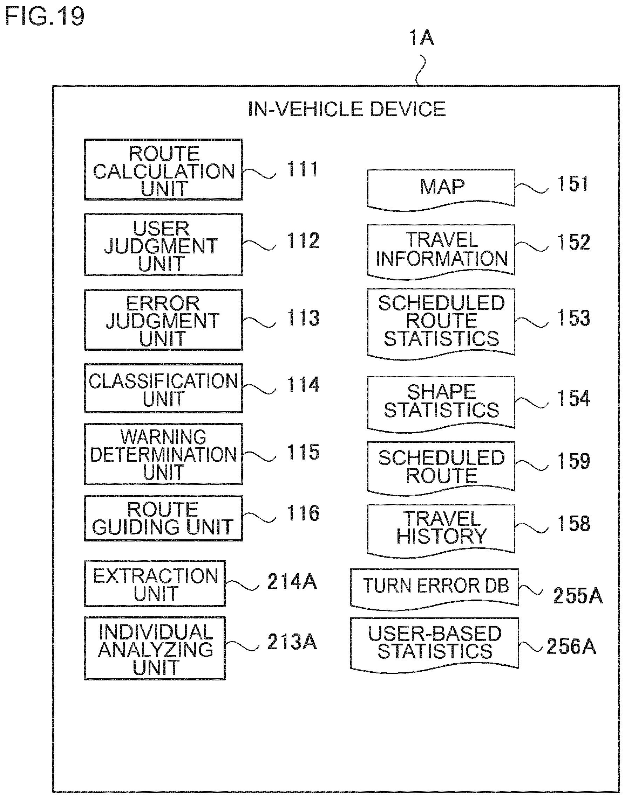

   Fig. 19 is a functional block diagram of the in-vehicle device 1A in the second embodiment.

### DESCRIPTION OF EMBODIMENTS

### - First embodiment -

The first embodiment of the route guiding system according to the present invention is now explained with reference to Fig. 1 to Fig. 18.

### (System configuration)

Fig. 1 is a diagram showing the hardware configuration of the route guiding system S. The route guiding system S is configured from a server 2, and a plurality of in-vehicle devices 1. However, because all of the in-vehicle devices 1 have the same configuration, only one in-vehicle device 1 is shown in Fig. 1. The in-vehicle device 1 is installed in a vehicle 3. The in-vehicle device 1 and the server 2 are connected via a network X. Because the in-vehicle device 1 is installed in the vehicle 3 and moves, the network X at least includes a wireless communication network. The vehicle 3 comprises the in-vehicle device 1 and a display unit 4. The display unit 4 is, for instance, a liquid crystal display.

The in-vehicle device 1 comprises a CPU 11 as a central processing unit, a ROM 12 as a read-only storage device, a RAM 13 as a main storage device, an in-vehicle storage unit 14 as a non-volatile storage device, an in-vehicle communication unit 15, a display control unit 16, and a position acquisition unit 19. The CPU 11 realizes the functions described later by reading the programs stored in the ROM 12 into the RAM 13 and executing those programs. The in-vehicle storage unit 14 is, for instance, a flash memory. The in-vehicle communication unit 15 is, for instance, a wireless communication module compatible with 3G or 4G, and realizes communication with the server 2. However, the vehicle 3 may also comprise a wireless communication device, and the in-vehicle communication unit 15 may realize communication with the server 2 by outputting an operating command to the wireless communication device installed in the vehicle 3.

The display control unit 16 is, for instance, a video output module, and outputs a video signal to the display unit 4 and causes the display unit 4 to display a video. The position acquisition unit 19 is a GPS receiver. The position acquisition unit 19 receives radio waves from a plurality of satellites configuring a satellite navigation system, and calculates the position of one's own vehicle; that is, the latitude and longitude, by analyzing the signals included in the radio waves. In the ensuing explanation, the position of one's own vehicle is also referred to as the "own vehicle position". However, the vehicle 3 may also comprise a GPS receiver, and the position acquisition unit 19 may acquire the own vehicle position from the GPS receiver installed in the vehicle 3.

The server 2 comprises a CPU 21 as a central processing unit, a ROM 22 as a read-only storage device, a RAM 23 as a main storage device, a server storage unit 24 as a non-volatile storage device, and a server communication unit 25. The CPU 21 realizes the functions described later by reading the programs stored in the ROM 22 into the RAM 23 and executing those programs. The server storage unit 24 is, for instance, a hard disk drive. The server communication unit 25 is, for instance, a network interface card, and realizes communication with the in-vehicle device 1.

### (Functional configuration)

Fig. 2 is a functional block showing the functions equipped in the in-vehicle device 1. However, Fig. 2 shows information stored in the in-vehicle storage unit 14 and the RAM 13. The in-vehicle device 1 comprises, as its functions, a route calculation unit 111, a user judgment unit 112, an error judgment unit 113, a classification unit 114, a warning determination unit 115, and a route guiding unit 116. The in-vehicle storage unit 14 stores a map 151, a travel history 158, and shape statistics 154. The RAM 13 stores travel information 152, scheduled route statistics 153, and a scheduled route 159. However, the travel information 152, the scheduled route statistics 153, and the scheduled route 159 may also be stored in the in-vehicle storage unit 14.

The map 151 is map information used for guiding the travel route of the vehicle 3 or calculating the scheduled route 159, and is stored in advance in the in-vehicle storage unit 14. The map 151 contains a version number indicating the update count and the creation date. The map 151 contains information of the node and the link, the node is a point that is set in correspondence with intersections or junctions on the road, and the link is a line that connects two road nodes that are parallel to the road. The map 151 contains information of the position of the respective nodes; that is, information of the latitude and the longitude. Furthermore, the map 151 contains information of the number of links connected to the respective nodes, the positional relation of the nodes and the links, and the width of the road represented with the links. The positional relation of the nodes and the links is, for instance, the direction of the links based on the nodes.

The travel information 152 is information that is generated each time the vehicle 3 sets the scheduled route 159 and passes an intersection, and is sent from the in-vehicle device 1 to the server 2. The travel information 152 is created by the error judgment unit 113. The scheduled route statistics 153 are information received from the server 2 as the information corresponding to the scheduled route 159 that the in-vehicle device 1 sent to the server 2. The scheduled route statistics 153 contain information related to the warning message of the nodes included in the scheduled route 159. However, there may be cases where certain nodes included in the scheduled route 159 do not contain information related to the warning message of the nodes.

The shape statistics 154 are information received from the server 2, and are statistics information regarding the relation of the shape of the intersection and the turn error. The shape statistics 154 are sent from the server 2 to the in-vehicle device 1 as needed. The server 2 may periodically create the shape statistics 154 and send them to the in-vehicle device 1, or attach them to the shape statistics 154 upon sending the scheduled route 159 to the in-vehicle device 1. The travel history 158 stores the intersections that the vehicle 3 has previously passed; that is, the coordinates of the nodes. The travel history 158 is updated each time the vehicle 3 passes an intersection.

The scheduled route 159 is the route from the current location to the destination, and is created by the route calculation unit 111. However, the starting point of the scheduled route 159 may be a position that is designated in substitute for the current location, and a route calculated by a device other than the route calculation unit 111, such as another device connected to the in-vehicle device 1, may be treated as the scheduled route 159.

The route calculation unit 111 calculates the travel route of the vehicle 3 from the current location to the input destination, and records the calculated travel route as the scheduled route 159 in the RAM 13. This embodiment is explained on the premise that the calculation of the scheduled route 159 by the route calculation unit 111 has already been completed. The route calculation unit 111 is monitoring the own vehicle position acquired by the position acquisition unit 19, and, when the own vehicle position deviates from the scheduled route 159, and the route from the own vehicle position as the starting point to the destination is recalculated. In the ensuing explanation, the recalculation of the route is referred to as "rerouting".

The user judgment unit 112 judges the person driving the vehicle 3, and identifies the user ID of the user (driver). The user judgment unit 112 can use various known methods and, for instance, the user judgment unit 112 can register the ID of portable terminals for each user in advance, and identify the driver by using the ID of the portable terminal located near the driver's seat. Moreover, the user judgment unit 112 can also identify the user by using the image of a driver's seat taken with a camera installed in the vehicle 3.

The error judgment unit 113 judges, each time the vehicle 3 passes an intersection, whether the passing is a normal passing, an intentional deviation, or some kind of turn error. When the error judgment unit 113 determines that the passing is some kind of turn error, the error judgment unit 113 causes the classification unit 114 to classify the turn error. The error judgment unit 113 creates the travel information 152 by using the classification determined by the error judgment unit 113 or the classification unit 114, and sends the created travel information 152 to the server 2. The classification unit 114 classifies the turn error; that is, the current state in which the vehicle position has deviated from the scheduled route, as an overshoot error, an undershoot error, or a direction error, and outputs the classification result to the error judgment unit 113.

The warning determination unit 115 determines the description of the warning to be given to the driver of the vehicle 3 based on the scheduled route statistics 153, the shape statistics 154, and the scheduled route 159. The warning determination unit 115 outputs an operating command to the display control unit 16, and causes the display unit 4 to display the warning. The warning determination unit 115 for instance, issues a warning to the effect that the vehicle 3 should make a right turn at the next intersection, and be careful of a turn error diagonally to the right. Here, the warning determination unit 115 issues a warning in a manner capable of distinguishing the link into the following three types; specifically, a correct link of advancing from the intersection to the next link, a link in which the vehicle 3 is highly likely to erroneously pass through, and other links.

Fig. 3A and Fig. 3B are schematic diagram of the screen that is displayed on the display unit 3 based on the operating command of the warning determination unit 115. Fig. 3A is an example of adding a marker, and Fig. 3B is an example of changing the representation of the nodes. Both Fig. 3A and Fig. 3B show the same guidance at the same intersection, and the five links of link L21 to link L25 are connected to a node N21. To put it differently, the node N21 is a five-street intersection. According to the scheduled route 159, the vehicle 3 should advance from the node N21 to the link L22, but, according to the scheduled route statistics 153 described later, many vehicles erroneously enter the link L23. In the foregoing case, the warning determination unit 115 displays a warning in a manner to cause the user to hold back from entering the link which is often entered erroneously.

For example, as shown in Fig. 3A, an X mark having a negative meaning is added to the line L23, and an O mark having a positive meaning is added to the line L22 as the correct link to be entered. The other links are not given any special decoration. Moreover, as another example, as shown in Fig. 3B, the line L23 is shown with a broken line, and the line L22 to be entered is displayed by emphasizing the road width in bold. However, Fig. 3A and Fig. 3B are merely an exemplification, and the three types of links may also be distinguished in a different manner.

The explanation is continued by returning to Fig. 2. The route guiding unit 116 guides the vehicle 3 to the destination based on the scheduled route 159 and the map 151. The route guiding unit 116 displays a video on the display unit 4 via the display control unit 16 as needed. Moreover, the route guiding unit 116 may also verbally guide the vehicle 3 through a speaker not shown. However, when the warning determination unit 115 outputs an operating command to the display control unit 16, the route guiding unit 116 does not output an operating command to the display control unit 16.

Fig. 4 is a functional block showing the functions equipped in the server 2. However, Fig. 4 shows the information stored in the server storage unit 24 and the RAM 23. The server 2 comprises, as its functions, a DB updating unit 211, a shape analyzing unit 212, an individual analyzing unit 213, and an extraction unit 214. The server storage unit 24 stores a turn error DB 255, user-based statistics 256, and shape statistics 254. The RAM 23 of the server 2 stores travel information 252, scheduled route statistics 253, and a scheduled route 259.

The travel information 252 is the travel information 152 sent by the in-vehicle device 1. In other words, the travel information 252 and the travel information 152 are the same. The scheduled route statistics 253 are created by the extraction unit 214 and sent to the in-vehicle device 1, and treated as the scheduled route statistics 153 in the in-vehicle device 1. In other words, the scheduled route statistics 153 and the scheduled route statistics 253 are the same. The shape statistics 254 are created by the shape analyzing unit 212 and sent to the in-vehicle device 1, and treated as the shape statistics 154 in the in-vehicle device 1. In other words, the shape statistics 154 and the shape statistics 254 are the same. The scheduled route 259 is the scheduled route 159 sent by the in-vehicle device 1. In other words, the scheduled route 259 and the scheduled route 159 are the same.

The turn error DB 255 stores the turn error statistics for each intersection. The turn error DB 255 is created by using the travel information 152 collected from a plurality of in-vehicle devices 1 connected to the server 2. The turn error DB 255 is updated by the DB updating unit 211. The turn error DB 255 stores the travel history for each intersection, and records whether the vehicle 3 was able to travel along the scheduled route 159, and, in cases where the scheduled route 159 has been deviated, whether the vehicle 3 made a wrong turn. The user-based statistics 256 are created by the individual analyzing unit 213. The user-based statistics 256 store the turn error statistics for each user.

The DB updating unit 211 updates the turn error DB 255 by using the travel information 152 received from the in-vehicle device 1. Specifically, when the conditions described in the received travel information 152 correspond to any one of the existing records of the turn error DB 255, the DB updating unit 211 increments the value of the "count" field of such record described later by "1". When the conditions described in the received travel information 152 do not correspond to any one of the existing records of the turn error DB 255, the DB updating unit 211 adds a new record.

The shape analyzing unit 212 reads the turn error DB 255 and creates the shape statistics 254. The shape analyzing unit 212 may create the shape statistics 254 each time the turn error DB 255 is updated once or multiple times, or create the shape statistics 254 each time a predetermined length of time has elapsed.

The individual analyzing unit 213 updates the user-based statistics 256 by using the travel information 152 received from the in-vehicle device 1; that is, the travel information 252. Specifically, the individual analyzing unit 213 updates the value of the field corresponding to the classification of the user's error by designating the record having the same ID as the user ID included in the travel information 252 as the update target. Furthermore, the individual analyzing unit 213 also updates the value of the "characteristics" field described later as needed. The details will be described later. The extraction unit 214 creates the scheduled route statistics 153 based on the turn error DB 255, the user-based statistics 256, and the scheduled route 159 received from the in-vehicle device, and sends the created scheduled route statistics 153 to the in-vehicle device 1. The details will be described later.

### (Classification of turn error)

The turn error in this embodiment is now explained with reference to Fig. 5A to Fig. 5D. A turn error is an error related to the path of a vehicle, and is classified as an overshoot error, an undershoot error, a direction error, or a normal passing. While the normal passing indicated as the last type of turn error above shows that the vehicle 3 has traveled along the scheduled route 159, in this embodiment the normal passing is treated as one classification of a turn error for the sake of convenience.

Fig. 5A to Fig. 5D are diagrams explaining a turn error. Fig. 5A is a diagram showing the scheduled route, Fig. 5B is a diagram showing the undershoot error, Fig. 5C is a diagram showing the overshoot error, and Fig. 5D is a diagram showing the direction error. Fig. 5A to Fig. 5D show two intersections N11 and N12, and seven roads L11 to L17 connected to these intersections. The vehicle 3 is traveling on the road L11 in the upward direction of Fig. 5A to Fig. 5D, and the scheduled route is L11, N11, L13, N12, and L15 as shown in Fig. 5A.

As shown in Fig. 5B, when the vehicle 3 makes a right at N11 and enters L12, it is determined as an undershoot error. This is because the vehicle 3 changed its advancing direction before the scheduled route. As shown in Fig. 5C, when the vehicle 3 passes through N12 in addition to N11, it is determined as an overshoot error. This is because, according to the scheduled route, the vehicle 3 passed the intersection at which it should have changed its advancing direction. As shown in Fig. 5D, when the vehicle 3 passes through N11 and enters L17 at N12, it is determined as a direction error. This is because, while the intersection of changing the advancing direction is correct, the direction is incorrect.

### (Turn error DB)

Fig. 6 is a diagram showing an example of the turn error DB 255. The turn error table 255 is configured from a plurality of records, and each record comprises the fields of intersection ID 2551, coordinates 2552, advancing direction 2553, scheduled direction 2554, travel direction 2555, intersection-to-intersection distance 2556, number of connecting roads 2557, scheduled road width 2558, classification 2559, count 255A, and warning message 255B. The intersection ID 2551 field stores the so-called primary key of a database; that is, a value that is unique to each record. The coordinates 2552 field stores the coordinates of the intersection; that is, the combination of latitude and longitude.

The fields of advancing direction 2553, scheduled direction 2554, and travel direction 2555 store the angles based on the intersection, and clockwise angles are stored in which the road connecting the intersection from the center to the north is "0", and the road connecting the intersection from the center to the each is "90". The advancing direction 2553 field stores the angle that the vehicle 3 enters the intersection which is identified based on the values of the coordinates 2552 field. The scheduled direction 2554 field stores the angle or the road scheduled to be entered from the intersection which is identified based on the values of the coordinates 2552 field in the scheduled route. The travel direction 2555 field stores the angle indicating the direction that the vehicle 3 entered the intersection which is identified based on the values of the coordinates 2552 field.

Note that the values of the intersection ID 2551 field are prescribed based a combination of the coordinates 2552, the advancing direction 2553, the scheduled direction 2554, and the travel direction 2555. In other words, even if there is physically only one intersection, when the value of any one of the fields of advancing direction 2553, scheduled direction 2554, and travel direction 2555 is different, the values of the intersection ID 2551 field will differ.

The intersection-to-intersection distance 2556 field stores the distance from the intersection indicated with the coordinates 2552 to the next intersection when the vehicle 3 advances in the advancing direction 2553, and the unit is, for example, meters. Accordingly, when the values of the fields of coordinates 2552 and advancing direction 2553 are the same, the values of the intersection-to-intersection distance 2556 field are also the same. The number of connecting roads 2557 field stores the number of roads connected to the intersection indicated with the coordinates 2552; that is, the number of links. When the values of the coordinates 2552 field are the same, then the values of the number of connecting roads 2557 field are also the same.

The scheduled road width 2558 field stores the width of the roads existing in the scheduled direction 2554 at the intersection indicated with the coordinates 2552, and the unit is, for example, meters. The classification 2559 field stores one of the turn error classifications. The count 255A field stores the number of times that the circumstances identified with the values of the intersection ID 2551 field have occurred. The warning message 255B field stores the classification which represents a record in which the coordinates 2552, the advancing direction 2553, and the scheduled direction 2554 are the same. However, in the example shown in Fig. 6, abbreviations are used due to space restrictions. In other words, "direction error" is indicated as "direction", and "normal passing" is indicated as "normal". The method of determining the values of the warning message 255B field will be described later.

### (User-based statistics 256)

Fig. 7 is a diagram showing an example of the user-based statistics 256. The user-based statistics 256 have a record corresponding to each user, and each record has the fields of user ID 2561, overshoot error 2562, undershoot error 2563, direction error 2564, and characteristics 2565. The user ID 2561 field stores an ID for identifying each user. The respective fields of overshoot error 2562, undershoot error 2563, and direction error 2564 store the number of times that the respective errors were counted. The characteristics 2565 field stores the classification of a turn error in which the user indicated by the user ID 2561 is likely to make. The values that may be stored in the characteristics 2565 field contain at least an overshoot error, an undershoot error, and a direction error.

### (Travel information 152, 252)

Fig. 8 is a diagram showing an example of the travel information 152. As described above, the travel information 152 and the travel information 252 are the same, and here the travel information 152 is explained as a representative example. In the example shown in Fig. 8, while the specific value is not indicated and the name of the information to be indicated is shown, in effect the travel information 152 is configured only from values, or a combination of name and value.

The travel information 152 is configured from a user ID, a map version, a navigation version, and one or more pieces of intersection passing information. As the user ID, the ID output by the user judgment unit 112 is used. As the map version, the version information included in the map 151 is used. As the navigation version, the version information of the program of the warning determination unit 115 is used. The intersection passing information is a combination of one record of the turn error DB 255 excluding two values. The two values are the intersection ID 2551 and the count 255A.

The values of the coordinates 2552 are the position of the intersection that the vehicle 3 passed immediately before. The advancing direction 2553 and the travel direction 2555 are calculated from the time series information of the own vehicle position. However, the map 151 may be added in the calculation of the advancing direction 2553 and the travel direction 2555. In other words, when it is discovered that, in a certain intersection, the roads connected in the map 151 are the four roads of 0 degrees, 90 degrees, 180 degrees, and 270 degrees, the angle closest to the four angles calculated above may be used. The scheduled direction 2554 is calculated based on the scheduled route 159 and the own vehicle position. The intersection-to-intersection distance 2556 and the number of connecting roads 2557 are identified based on the coordinates 2552 and the map 151. The scheduled road width 2558 is identified based on the scheduled route 159 and the map 151. The classification 2559 is identified by the error judgment unit 113 or the classification unit 114.

### (Scheduled route statistics 153, 253)

Fig. 9 is a diagram showing an example of the scheduled route statistics 153. As described above, the scheduled route statistics 253 and the scheduled route statistics 153 are the same, and here the scheduled route statistics 153 are explained as a representative example. The scheduled route statistics 153 contain the turn error information regarding all intersections included in the scheduled route 159. In the ensuing explanation, information regarding one intersection contained in the scheduled route statistics 153 is referred to as a "record". As shown in Fig. 9, the scheduled route statistics 153 are configured from the coordinates 2552, the advancing direction 2553, the scheduled direction 2554, the travel direction 2555, and the warning message 255B regarding the respective intersections. However, generally speaking, because the vehicle 3 usually passes through each intersection once in the scheduled route 159, the advancing direction 2553, the scheduled direction 2554, and the travel direction 2555 may be deleted from the scheduled route statistics 153.

### (Shape statistics 154, 254)

Fig. 10 is a diagram showing an example of the shape statistics 154. As described above, the shape statistics 254 and the shape statistics 154 are the same, and here the shape statistics 154 are explained as a representative example. The shape statistics 154 describe the characteristics of an intersection in which a direction error, an undershoot error, or an overshoot error tends to occur. Specifically, with respect to each type of error, the intersection-to-intersection distance 2556, the number of connecting roads 2557, the angular difference, and the scheduled road width 2558 are included. The angular difference is the difference between the scheduled direction 2554 and the travel direction 2555. The intersection-to-intersection distance 2556, the number of connecting roads 2557, and the scheduled road width 2558 have the same meaning of each of those in the turn error DB 255.

### (Operational overview)

Fig. 11 is a timing chart showing the operational overview of the route guiding system S. In the in-vehicle device 1, the user judgment unit 112 foremost judges the user sitting in the driver's seat of the vehicle 3 (S911), and the route calculation unit 111 calculates the scheduled route 159 showing the route to the destination based on the input (S912). Next, the in-vehicle device 1 sends the user ID of the user judged by the user judgment unit 112 and the scheduled route 159 to the server 2 (S913). When the server 2 receives the foregoing user ID and scheduled route 159, the extraction unit 214 refers to the turn error DB 255 and the user-based statistics 256 and generates the scheduled route statistics 253 (S914), and sends the generated scheduled route statistics 253 to the in-vehicle device 1 (S915). The in-vehicle device that received the scheduled route statistics 253 determines what kind of warning the warning determination unit 115 will issue in each intersection in the scheduled route 159 (S916). However, the warning determination unit 115 may perform the processing while the vehicle 3 is traveling.

When the vehicle 3 starts to travel, the error judgment unit 113 determines whether some kind of turn error has occurred each time the vehicle 3 passes through an intersection (S920), and, when there is an error, causes the classification unit 114 to classify the error (S921). When the error judgment unit 113 creates the travel information 152, the error judgment unit 113 sends the created travel information 152 to the server 2 (S922). When the server 2 receives the travel information 152, the DB updating unit 211 updates the turn error DB 255 (S923), and the individual analyzing unit 213 updates the user-based statistics 256 (S924).

### (Flowchart | Error judgment unit 113)

Fig. 12 is a flowchart representing the operation of the error judgment unit 113. In the ensuing explanation, the agent of the respective steps is the CPU 11 of the in-vehicle device 1. The error judgment unit 113 starts the operation when the route calculation unit 111 of the vehicle 3 calculates the scheduled route 159, and starts the operation once again when the processing shown in Fig. 12 is completed.

The error judgment unit 113 foremost judges whether the vehicle 3 has passed through an intersection (S301). In the ensuing explanation, the intersection through which the vehicle 3 passed through in S301 is referred to as the "immediately preceding intersection". Next, when the error judgment unit 113 determines that the vehicle 3 has passed through an intersection, the error judgment unit 113 determines whether rerouting was performed (S302). When the error judgment unit 113 determines that the vehicle 3 has not passed through an intersection, the error judgment unit 113 remains at S301. When the error judgment unit 113 determines in S302 that rerouting has been performed, it proceeds to S303, and, when the error judgment unit 113 determines in S302 that rerouting has not been performed, it sets the classification to normal passing (S304), and then proceeds to S307. In S303, the error judgment unit 113 refers to the travel history 158 and determines whether the vehicle 3 has previously passed through the immediately preceding intersection, and, upon determining that the vehicle 3 has previously passed through the immediately preceding intersection, sets the classification to intentional deviation (S305), and then proceeds to S307. When the error judgment unit 113 determines in S303 that the vehicle 3 has not previously passed through the immediately preceding intersection, it activates the classification unit 114 (S306), and, upon determining that the clarification by the classification unit 114 is completed (S306A: YES), proceeds to S308. The error judgment unit 113 stands by until the classification by the classification unit 114 is completed (S306A: NO). In S303, whether or not the vehicle 3 has previously passed through the immediately preceding intersection is determined based on whether the coordinates of the immediately preceding intersection are included in the travel history 158. However, the travel history 158 may also store the advancing direction in combination with the coordinates, and whether or not the vehicle 3 has previously passed through the immediately preceding intersection may be determined based on whether the coordinates of the immediately preceding intersection and the advancing direction toward the immediately preceding intersection are included in the travel history 158.

In S307 which is executed subsequent to S304, S305, or S306A, the error judgment unit 113 creates the travel information 152 and sends the created travel information 152 to the server 2. The information to be included in the travel information 152 is determined as follows. In other words, the user ID is determined based on the output of the user judgment unit 112, and the map version and the navigation version are determined based on the information stored in the in-vehicle storage unit 14, and the coordinates 2552, the advancing direction 2553, and the scheduled direction 2554 are determined based on the scheduled route 159. Moreover, the travel direction 2555 is determined from the coordinates 2552 and the current location of the vehicle 3, the intersection-to-intersection distance 2556, the number of connecting roads 2557, and the scheduled road width 2558 are determined from the map 151, and the classification 2559 is determined based on the processing of the classification unit 114 explained with reference to S304, S305, or Fig. 13.

In S308 which is executed subsequent to S307, the error judgment unit 113 updates the travel history 158. Specifically, the error judgment unit 113 adds the coordinates of the immediately preceding intersection that the vehicle 3 passed through to the travel history 158. However, if the coordinates of that intersection are already included in the travel history 158, the error judgment unit 113 does not have to update the travel history 158. The operation of the error judgment unit 113 is as described above.

### (Flowchart | Classification unit 114)

Fig. 13 is a flowchart representing the operation of the classification unit 114. In the ensuing explanation, the agent of the respective steps is the CPU 11 of the in-vehicle device 1. The classification unit 114 starts the operation based on an operating command of the error judgment unit 113.

In S311, the classification unit 114 foremost determines whether the vehicle 3 traveled straight ahead through the immediately preceding intersection. However, the term "straight ahead" means following the road, and may involve the operation of the steering wheel by the user. The classification unit 114 performs the determination based on the history of the position information acquired by the position acquisition unit 19, and proceeds to S312 upon determining that the vehicle has not traveled straight ahead through the intersection, and proceeds to S315 upon determining that the vehicle has traveled straight ahead through the intersection. In S312, the classification unit 114 refers to the scheduled route 159, and determines whether the path should have been changed at the immediately preceding intersection; that is, whether the vehicle 3 should have made a right turn or a left turn. When the classification unit 114 determines that the path should have been changed, it sets the classification to direction error (S313), and then proceeds to S316. When the classification unit 114 determines that the path did not have to be changed, it sets the classification to undershoot error (S314), and then proceeds to S316. In S315 which is executed when a positive determination is obtained in S311, the classification unit 114 sets the classification to overshoot error, and then proceeds to S316.

In S316, the classification unit 114 outputs the classification set in any one of S313 to S315 to the error judgment unit 113. The operation of the classification unit 114 is as described above.

### (Flowchart | Warning determination unit 115)

Fig. 14 is a flowchart representing the operation of the warning determination unit 115. In the ensuing explanation, the agent of the respective steps is the CPU 11 of the in-vehicle device 1. The warning determination unit 115 starts the operation upon receiving the scheduled route statistics 153 from the server 2.

The warning determination unit 115 foremost sets the first node of the scheduled route 159 as the processing node (S321). Next, the warning determination unit 115 determines whether the processing node is included in the scheduled route statistics 153 received from the server 2 (S322). When the warning determination unit 115 obtains a positive determination in S322, the warning determination unit 115 determines whether the warning message of the processing node is normal (S323), and, when the warning determination unit 115 determines that the warning message of the processing node is normal, because no warning is required, it proceeds to S326. However, the warning determination unit 115 obtains a negative determination when the warning message is "No information".

When the warning determination unit 115 obtains a negative determination in S322, the warning determination unit 115 estimates the warning message of the processing node based on the shape statistics 154. Specifically, the warning determination unit 115 determines whether the shape of the processing node coincides with any of the characteristics of the shape statistics 154, and, when the shape of the processing node coincides with a certain characteristic, the warning determination unit 115 uses that characteristic as the warning message of the processing node, and, when the shape of the processing node does not coincide with a certain characteristic, the warning determination unit 115 sets the warning message to "Normal".

In S325 which is executed when a negative determination is obtained in S323, the warning determination unit 115 displays a correct path, easily mistakable path, and other paths on the display unit 3 by using the display control unit 16 as illustrated in Fig. 3, and then proceeds to S326. In S326, the warning determination unit 115 determines whether all nodes included in the scheduled route 159 have been processed, and, upon determining that there is an unprocessed node (S326: NO), the warning determination unit 115 sets the next node as the processing node (S327), and then returns to S322. When the warning determination unit 115 determines that all nodes have been processed (S326: YES), it ends the processing shown in Fig. 14.

### (Flowchart | DB updating unit 211)

Fig. 15 is a flowchart representing the operation of the DB updating unit 211. In the ensuing explanation, the agent of the respective steps is the CPU 21 of the server 2. The DB updating unit 211 starts the operation when the travel information 152 is received from the in-vehicle device 1 and stored as the travel information 252 in the RAM 23.

In S401, the DB updating unit 211 foremost identifies a record of the turn error DB 255 to be updated based on the travel information 252. Specifically, the DB updating unit 211 identifies a record of the turn error DB 255 which coincides with a combination of the coordinates 2552, the advancing direction 2553, the scheduled direction 2554, and the travel direction 2555 included in the travel information 252. Next, the DB updating unit 211 updates the value of the count 255A field of the record identified in S401; specifically, increments the numerical value by "1" (S402).

In subsequent S403, attention is given to a record in which the coordinates 2552, the advancing direction 2553, and the scheduled direction 2554 are the same as the record identified in S401, and whether normal passing accounts for 95% or higher. For example, in the example shown in Fig. 6, because the coordinates 2552, the advancing direction 2553, and the scheduled direction 2554 are the same with the intersection IDs 1 to 3, the sum of the count 255A in the three records is "39", and the normal passing is "5", the ratio of normal passing is approximately 13%, and a negative determination is obtained in S403. When a positive determination is obtained in S403, the warning message is updated to "Normal", and, when a negative determination is obtained in S403, the classification with the highest count is updated. For instance, in the foregoing example, "direction error" among the three errors has the highest count of "30" and is updated to the value of the warning message 255B field. When there are multiple classifications with the highest count, a plurality of classifications with the highest count are set in the warning message 255B. The operation of the DB updating unit 211 is as described above.

### (Flowchart | Individual analyzing unit 213)

Fig. 16 is a flowchart representing the operation of the individual analyzing unit 213. In the ensuing explanation, the agent of the respective steps is the CPU 21 of the server 2. The individual analyzing unit 213 starts the operation when the travel information 152 is received from the in-vehicle device 1 and stored as the travel information 252 in the RAM 23.

In S411, the individual analyzing unit 213 foremost identifies a record to be updated based on the user ID contained in the travel information 252. Specifically, the individual analyzing unit 213 identifies a record having a user ID which coincides with the user ID contained in the travel information 252. Next, the individual analyzing unit 213 determines whether the classification 2559 contained in the travel information 252 is normal passing, and, when the individual analyzing unit 213 determines that the classification 2559 is normal passing (S412: YES), ends the processing because there is no need to update the user-based statistics 256. When the individual analyzing unit 213 determines in S412 that the classification 2559 is other than normal passing (S412: NO), the individual analyzing unit 213 updates the value of the corresponding field by incrementing the value by "1" (S413).

Next, the individual analyzing unit 213 determines whether the field having a maximum value in the target record has been changed, and, when the individual analyzing unit 213 determines that the field having a maximum value in the target record has been changed (S414: YES), the individual analyzing unit 213 updates the value of the characteristics field of that record to the characteristics having the maximum value (S415). When a negative determination is obtained in S414, the individual analyzing unit 213 ends the processing. The operation of the individual analyzing unit 213 is as described above.

### (Flowchart | Extraction unit 214)

Fig. 17 is a flowchart representing the operation of the extraction unit 214. In the ensuing explanation, the agent of the respective steps is the CPU 21 of the server 2. The extraction unit 214 starts the operation when the scheduled route 159 is received from the in-vehicle device 1 and stored as the scheduled route 259 in the RAM 23, and creates the scheduled route statistics 253 as follows.

The extraction unit 214 foremost reads the received scheduled route 159 (S420), and sets the first node included in the scheduled route 159 as the processing target (S421). Next, the extraction unit 214 adds a new record to the scheduled route statistics 253, and sets the value of the coordinates 2552 field of the new record to the coordinates of the processing target node of the scheduled route 159 (S422). Next, the extraction unit 214 determines whether the coordinates of the processing target node of the scheduled route 159 are described in the turn error DB 255 (S423). When the coordinates are described in the turn error DB 255, the extraction unit 214 proceeds to S424, and, when the coordinates are not described in the turn error DB 255, the extraction unit 214 sets the warning message 255B of the record added in S422 to "No information" (S427). In S424, the extraction unit 214 determines whether the user's characteristics identified from the user-based statistics 256 and the user ID coincide with the values of the warning message 255B field of the processing target node described in the turn error DB 255. For example, in a case where the coordinates of the processing target node are (x1, y1), the advancing direction is 180 degrees, the scheduled direction is 100 degrees, and the user ID is 100, the determination is made as follows. In other words, the example of Fig. 6 indicates intersection IDs 1 to 3, and the value of the warning message 255B field is "direction error". Furthermore, in the example of Fig. 7, because the characteristics of the record in which the user ID is 100 are an overshoot error, the two do not coincide and a negative determination is obtained in S424.

When the extraction unit 214 obtains a positive determination in S424 (S424: YES), the extraction unit 214 replicates the values of the fields of warning message 255B and travel direction 2555 of the record added in S422 from the record of the turn error DB 255 corresponding to the processing target node (S425). For instance, in a case where the characteristic of a certain user is "direction error", the turn error DB 255 is an example shown in Fig. 6, and coordinates of the intersection of the processing target are (x1, y1), "140" as the value of the travel direction 2555 of a record in which the classification 2559 in the turn error DB 255 is "direction error" and the intersection ID 2551 is "3" is the value of the travel direction 2555 in the record added to the scheduled route statistics 253 in S422. When the extraction unit 214 obtains a negative determination in S424 (S424: NO), the warning message 255B of the record added in S422 is set to "Normal" (S426).

When any one of steps S425 to S427 is executed, the extraction unit 214 determines whether all nodes included in the scheduled route 159 have been processed (S428). When the extraction unit 214 determines that there is an unprocessed node (S428: NO), the extraction unit 214 sets the processing target to the next node and then returns to S422 (S429). When the extraction unit 214 determines that all nodes have been processed (S428: YES), it ends the processing shown in Fig. 17.

### (Flowchart | Shape analyzing unit 212)

Fig. 18 is a flowchart representing the operation of the shape analyzing unit 212. In the ensuing explanation, the agent of the respective steps is the CPU 21 of the server 2. The shape analyzing unit 212 creates the shape statistics 254 each time the turn error DB 255 is updated, or each time a predetermined length of time elapses, by executing the operation explained below.

The shape analyzing unit 212 foremost sets the processing targets to the three errors of direction error, undershoot error, and overshoot error (S441). Subsequently, the shape analyzing unit 212 executes the processing of S443 to S445 to the respective processing targets set in S441. For instance, the shape analyzing unit 212 foremost sets the processing target to "direction error" and performs the processing of S443 to S445, subsequently sets the processing target to "undershoot error" and performs the processing of S443 to S445, and finally sets the processing target to "overshoot error" and performs the processing of S443 to S445.

In S443, the shape analyzing unit 212 extracts a record from the turn error DB 255 in which the classification 2559 and the warning message 255B coincide with the processing target. In S444, the shape analyzing unit 212 calculates the difference between the scheduled direction 2554 and the travel direction 2555 as the angular difference for all extracted records. In S445, the shape analyzing unit 212 extracts the minimum value and the maximum value and records them as the shape statistics 254 with regard to the intersection-to-intersection distance 2556, the number of connecting roads 2557, the scheduled road width 2558, and the angular difference calculated in S444 for all extracted records. When the shape analyzing unit 212 executes the processing of S443 to S445 for all processing targets, the shape analyzing unit 212 ends the processing shown in Fig. 18.

According to the first embodiment described above, the following effects are yielded.
(1) An in-vehicle device 1 which can be installed in a vehicle is installed in a vehicle 3. The in-vehicle device 1 comprises an in-vehicle storage unit 14 which stores a scheduled route 159 to be traveled on by the vehicle 3, a position acquisition unit 19 which acquires an own vehicle position as a position of the vehicle 3, and an error judgment unit 113 and a classification unit 114 which determine a classification of a turn error as an error related to a path of the vehicle from a relation of the own vehicle position, which deviated from the scheduled route 159, and the scheduled route 159, and which associate the determined classification of the turn error and the last intersection through which the vehicle traveled on the scheduled route. Thus, the in-vehicle device 1 can record the classification of the turn error for each intersection through which the vehicle 3 traveled. It is thereby possible to create statistics of the turn error, and provide information for preventing a turn error for each intersection.
(2) The error judgment unit 113 determines the classification of the turn error when the own vehicle position has deviated from the scheduled route 119 and rerouting has occurred. Thus, the in-vehicle device 1 can promptly classify the turn error when a turn error occurs, and send the classified turn error to the server 2.
(3) The in-vehicle device 1 comprises an in-vehicle communication unit 15 which sends the scheduled route 159, information indicating the last intersection, and classification of the turn error to the server 2, an in-vehicle communication unit 15 which receives the scheduled route statistics 153 as information extracted from the turn error DB 255 based on the scheduled route 159 received by the server 2 by using the turn error DB 255, and a warning determination unit 115 and a display control unit 16 which issue a warning based on the scheduled route statistics 153, the scheduled route 159, and the own vehicle position. The turn error DB 255 is a database created based on the information indicating the last intersection and the classification of the turn error received by the server 2 from a plurality of in-vehicle devices 1. Thus, the turn error regarding the intersection through which the vehicle 3 will pass through next can be notified to the user based on the statistics of the turn error.
(4) The in-vehicle device 1 comprises a display control unit 16 which outputs a video signal to the display unit 4. The warning determination unit 115 outputs an operating command to the display control unit 16 for displaying a correct exit road from an intersection based on the scheduled route 159, an exit road that is likely to be erroneously used based on the scheduled route statistics 153, and other roads, each in different modes, with regard to a plurality of roads connected to the intersection. While it is only natural to indicate the correct path in the navigation, in this embodiment, by demonstrating a road in which drivers erroneously enter based on statistics, the user's error can be reduced. Furthermore, by inconspicuously displaying the other roads which are not the correct path but which are unlikely to be entered by the user in a manner that is different from the two roads described above, the user's visibility of the correct path can be improved.
(5) The in-vehicle device 1 comprises a user judgment unit 112 which identifies a driver driving the vehicle 3. The in-vehicle communication unit 15 sends identifying information of the driver to the server 2. The scheduled route statistics 153 to be received by the in-vehicle communication unit 15 includes information of an intersection included in the scheduled route 159 and in which an error classification that is likely to be statistically erroneous coincides with a classification of the turn error that is likely to be erroneously taken by the driver. Because there is a possibility that the tendency of error is different for each user, it is effective to issue a warning of a matter that is likely to be mistaken by the user. Moreover, if it is statistically likely that an error will be made, the possibility of the user making an error will further increase. Accordingly, the in-vehicle device 1 can issue a warning at an intersection in which the user is likely to make an error.
(6) The in-vehicle storage unit 14 stores shape statistics 154 as characteristics of a shape of the intersection for each turn error classification. The warning determination unit 115 determines, based on the shape statistics 154, the details of the warning to be issued in the intersection included in the scheduled route 159 and in which information related to the turn error is not described in the scheduled route statistics 153. Thus, the in-vehicle device 1 can issue a warning for preventing a turn error by using the shape statistics 154 even when the statistics information of the intersection configuring the scheduled route 159 is not included in the scheduled route statistics 153; to put it differently, even when the statistics information of the intersection configuring the scheduled route 159 is not stored in the turn error DB 255.
(7) The server 2 communicates with a plurality of in-vehicle devices 1. The server 2 comprises a server communication unit 25 which receives, from each of the plurality of in-vehicle devices 1, information indicating an intersection and a classification of a turn error as an error related to a path in the intersection, and a DB updating unit 211 which updates a turn error database 255 based on the information indicating the intersection and the classification of the turn error. Thus, the server 2 updates the turn error database 255 required for issuing a warning to prevent a turn error.
(8) The server communication unit 25 receives the scheduled route 159 to be traveled on by the vehicle 3 equipped with the in-vehicle device 1, and comprises an extraction unit 214 which extracts a classification of the turn error from the turn error database and creates scheduled route statistics 253 regarding the respective intersections included in the scheduled route 159. The server communication unit 25 sends the scheduled route statistics 253 to the in-vehicle device 1 that sent the scheduled route 159. Thus, the server 2 can provide the scheduled route statistics 253 to the in-vehicle device 1 based on the statistics stored in the turn error DB 255.
(9) A route guiding system S includes a plurality of in-vehicle devices 1 and a server 2. Each of the in-vehicle devices 1 comprises an in-vehicle storage unit 14, a position acquisition unit 19, an error judgment unit 113, a classification unit 114, an in-vehicle communication unit 15, a warning determination unit 115, and a display control unit 16. The server 2 comprises a server communication unit 25, a DB updating unit 211, and an extraction unit 214, and the server communication unit 25 sends the scheduled route statistics 253 to the in-vehicle device 1 that sent the scheduled route 159. Thus, the server 2 updates the turn error DB 255 based on the travel history 158 received from a plurality of in-vehicle devices, and creates the scheduled route statistics 253 by using the turn error DB 255. The in-vehicle device 1 can issue a warning for preventing a turn error by using the received scheduled route statistics 253.

### (Modified example 1)

In the first embodiment, information regarding all nodes included in the scheduled route 159 was contained in the scheduled route statistics 153. Nevertheless, information of the nodes with no specific information does not need to be contained in the scheduled route statistics 153. In the foregoing case, the record in which the warning message 255B in Fig. 9 is set to "No information" is deleted.

### (Modified example 2)

In the first embodiment, the extraction unit 214 of the server 2 created the scheduled route statistics 253 regarding the intersection included in the scheduled route 159 by replicating the travel direction 2555 of the record in which the warning message 255B coincides with the user's characteristics 2565 from the turn error DB 255. Nevertheless, the scheduled route statistics 253 may also be created by replicating the travel direction 2555 of the record in which the intersection included in the scheduled route 159 is the same as the coordinates 2552 and having the classification 2559 which coincides with the user's characteristics 2565.

### (Modified example 3)

At an intersection with nodes connected to multiple links; for instance, at a five-street or six-street intersection, multiple direction errors may occur. To put it differently, in the turn error DB 255, records in which the coordinates 2552, the advancing direction 2553, and the scheduled direction 2554 are the same, values of the records of the travel direction 2555 are different, and the classification 2559 is "direction error" in all records, may coexist. In the foregoing case, upon determining the values of the warning message 255B field, the values of the count 255A field may be totaled and evaluated, or may be evaluated without being totaled.

### (Modified example 4)

The in-vehicle device 1 may enable the registration of the user's home location, and the error judgment unit 113 may perform the following determination in S303. In other words, the error judgment unit 113 may determine whether the current location is within a predetermined distance, for instance within 10 km, from the user's registered home location. In the foregoing case, the in-vehicle device 1 is not required to record the travel history 158.

### (Modified example 5)

In the first embodiment, the error judgment unit 113 determined whether rerouting has occurred (Fig. 12, S302). Nevertheless, the error judgment unit 113 may also determine whether the position acquired by the position acquisition unit 19 has deviated from the scheduled route 159.

### (Modified example 6)

While not specifically referred to in the first embodiment described above, because the route guide may differ when the version of the map 151 or the route guiding unit 116 is different, it is desirable for the server 2 to create the turn error DB 255 for each version of the map 151 and the route guiding unit 116. In the foregoing case, the in-vehicle device 1 sends, together with the scheduled route 159, version information of the map 151 and the route guiding unit 116 to the server 2. The server 2 that received the foregoing information performs the processing described above by using the turn error DB 255 corresponding to these versions.

### - Second embodiment -

The second embodiment of the in-vehicle device is now explained with reference to Fig. 19. In the ensuing explanation, the same constituent elements as the first embodiment are given the same reference numeral, and the differences are mainly explained. Points that are not specifically explained are the same as the first embodiment. This embodiment mainly differs from the first embodiment with respect to the point that the processing is concluded only with the in-vehicle device. The hardware configuration of the in-vehicle device 1A is the same as the first embodiment, and the explanation thereof is omitted. However, in the second embodiment, the in-vehicle device 1A does not need to comprise the in-vehicle communication unit 15.

### (Functional configuration)

Fig. 19 is a functional diagram showing the functions equipped in the in-vehicle device 1A. However, Fig. 19 also shows the information stored in the in-vehicle storage unit 14 and the RAM 13. The in-vehicle device 1A comprises, as its functions, an individual analyzing unit 213A and an extraction unit 214A in addition to the configuration in the first embodiment. Moreover, the in-vehicle storage unit 14 of the in-vehicle device 1A stores a turn error DB 255A and user-based statistics 256A in addition to the information stored in the first embodiment. Moreover, in this embodiment, the turn error DB 255A and the shape statistics 154 are stored in the in-vehicle storage unit 14 in advance, and communication-based updating is not performed.

The operation of the individual analyzing unit 213A and the operation of the extraction unit 214A are respectively the same as the operation of the individual analyzing unit 213 and the operation of the extraction unit 214 in the first embodiment. The information stored in the turn error DB 255A and the user-based statistics 256A is the same as the information stored in the turn error DB 255A and the user-based statistics 256A in the first embodiment. In other words, in this embodiment, the processing is concluded within the in-vehicle device 1A by using the turn error DB 255A and the shape statistics 154 obtained by being acquired from the server 2 in the first embodiment.

According to the second embodiment described above, the following effects are yielded. (10) An in-vehicle device 1A comprises an individual analyzing unit 213A, and an extraction unit 214A. An in-vehicle storage unit 14 of the in-vehicle device 1A stores a turn error DB 255A and user-based statistics 256A. Thus, the in-vehicle device 1A can warn the user of a turn error regarding the intersection in which the vehicle will pass through next based on statistics of the turn error even in an environment in which communication with the server 2 is not possible.

### (Modified example of second embodiment)

The turn error DB 255A may also be updated by receiving information from the outside. For instance, the in-vehicle communication unit 15 may receive a new turn error DB 255A from the outside, and use it to replace the existing turn error DB 255A. Moreover, the in-vehicle communication unit 15 may receive data for updating the turn error DB 255A, and update the turn error DB 255A by writing the update data over the existing turn error DB 255A.

Each of the embodiments and modified examples described above may be modified as follows. While the programs of the in-vehicle device 1 were explained as being stored in the ROM 12, the programs may also be stored in the in-vehicle storage unit 14. Moreover, the program of the server 2 may also be stored in the server storage unit 24. Moreover, the in-vehicle device 1 and the server 2 may comprise an I/O interface not shown, and the programs may also be read from another device via the I/O interface and a medium that can be accessed by the in-vehicle device 1 and the server 2. The term "medium" used herein refers to a storage medium that can be attached to and detached from an I/O interface, or a communication medium such as a wired, wireless or optical network, or carrier waves or digital signals that propagate such network. Moreover, a part or all of the functions realized by the programs may also be realized with a hardware circuit or FPGA.

Each of the embodiments and modified examples described above may be respectively combined. While various embodiments and modified examples were described above, the present invention is not limited thereto. Other modes that can be conceived within the technical scope of the present invention are also covered by the scope of the present invention.

### REFERENCE SIGNS LIST

1... in-vehicle device
2... server
11 ... CPU
14... in-vehicle storage unit
15... in-vehicle communication unit
16... display control unit
19... position acquisition unit
24... server storage unit
25... server communication unit
111... route calculation unit
112... user judgment unit
113... error judgment unit
114... classification unit
115... warning determination unit
116... route guiding unit
119... scheduled route
151... map
152, 253... travel information
153, 253... scheduled route statistics
154, 254... shape statistics
158... travel history
159, 259... scheduled route
162... travel information
211... updating unit
212... shape analyzing unit
213... individual analyzing unit
214... extraction unit
255... turn error DB
256... user-based statistics

## Claims

1. An in-vehicle device which can be installed in a vehicle, comprising:
a storage unit which stores a scheduled route to be traveled on by the vehicle;
a position acquisition unit which acquires an own vehicle position as a position of the vehicle; and
a classification unit which determines a classification of a turn error as an error related to a path of the vehicle from a relation of the own vehicle position, which deviated from the scheduled route, and the scheduled route, and which associates the determined classification of the turn error and an intersection through which the vehicle traveled on the scheduled route.

2. The in-vehicle device according to claim 1,
wherein the classification unit determines a classification of the turn error when the own vehicle position deviates from the scheduled route.

3. The in-vehicle device according to claim 1 or claim 2, further comprising:
a sending unit which sends the scheduled route, information indicating the intersection, and a classification of the turn error to a server;
a receiving unit which receives scheduled route statistics sent by the server based on the scheduled route; and
a warning unit which gives warning based on the scheduled route statistics, the scheduled route, and the own vehicle position.

4. The in-vehicle device according to claim 3, further comprising:
a display control unit which outputs a video signal to a display device,
wherein the warning unit outputs an operating command to the display control unit for displaying a correct exit road from an intersection based on the scheduled route, an exit road that is likely to be erroneously used based on the scheduled route statistics, and other roads, each in different modes, with regard to a plurality of roads connected to the intersection.

5. The in-vehicle device according to claim 3 or claim 4, further comprising:
a user judgment unit which identifies a driver driving the vehicle,
wherein the sending unit additionally sends identifying information of the driver to the server, and
wherein the scheduled route statistics to be received by the receiving unit includes information of an intersection included in the scheduled route and in which an error classification that is likely to be statistically erroneous coincides with a classification of the turn error that is likely to be erroneously taken by the driver.

6. The in-vehicle device according to any one of claims 3 to 5, further comprising:
a storage unit which stores shape statistics information as characteristics of a shape of the intersection for each classification of the turn error,
wherein the warning unit gives warning based on the scheduled route statistics, the scheduled route, the shape statistics information, and the own vehicle position.

7. The in-vehicle device according to any one of claims 3 to 5, further comprising:
a database which includes statistics of a classification of a turn error as an error related to a path of a vehicle for each intersection; and
an extraction unit which extracts statistics of a classification of the turn error from the database and creates the scheduled route statistics regarding the respective intersections included in the scheduled route.

8. A classification method to be executed by a computer installed in a vehicle and comprising a storage unit which stores a scheduled route to be traveled by the vehicle, comprising the steps of:
acquiring an own vehicle position as a position of the vehicle; and
determining a classification of a turn error as an error related to a path of the vehicle from a relation of the own vehicle position, which deviated from the scheduled route, and the scheduled route, and associating the determined classification of the turn error and an intersection through which the vehicle traveled on the scheduled route.
